# EUROPEAN PATENT SPECIFICATION

(11) **EP 2 301 765 B1**
(45) Date of publication and mention of the grant of the patent: **16.01.2013**
(21) Application number: 09012123.7
(22) Date of filing: 23.09.2009
(51) Int. Cl.: B60B 33/02

(54) **Castor**
Lenkrolle
Roulette

(43) Date of publication of application: 30.03.2011
(73) Proprietor: Haion Caster Industrial Co., Ltd., Taipei County 241 (TW)
(72) Inventor: Chou, Chuan-Hai, Sanchong City Taipei County 241 (TW)
(74) Representative: Lang, Christian

(56) References cited:
- EP-A2- 1 527 906
- WO-A1-02/055322
- DE-A1- 2 937 540
- GB-A- 2 179 848

## Description

### BACKGROUND OF THE INVENTION

### (a) Field of the Invention

The present invention relates to a truckle, and particularly to a truckle which either limits direction solely or limits direction and rotation simultaneously. Such a truckle is known from GB 2 179 848 A, that forms the closest prior art.

### (b) Description of the Prior Art

A conventional truckle substantially comprises a base and a wheel pivoting to the base. An arresting unit is disposed between the base and the wheel. The arresting unit is a metal plate attached to the wheel. A shaft is provided on an end of the base for assembling the truckle to a bottom of a carried object. The wheel rotates to move the object, and at the same time, the shaft brings the base to rotate the wheel in multi-directions. As the object arrives at a target position, the arresting unit presses the wheel to stop.

The wheel of the conventional truckle can be pressed to limit its rotation. However, the truckle only limits rotation of the wheel but fails to determine direction of the wheel while arresting. Once the wheel is arrested, the truckle may change direction by the shaft. The truckle cannot limit rotation and direction effectively, thus can not meet practical requirement.

### SUMMARY OF THE INVENTION

To obviate the above drawback, accordingly, an object of the present invention is to provide a truckle which either limits direction solely or limits direction and rotation simultaneously and which has a firm structure and can be reliably arrested.

To achieve the above object, the truckle of the present invention comprises a swiveling shaft, a rack, a driving unit received in the swivel shaft, and an arresting unit assembled with the driving unit. The swiveling shaft defines a through hole near an end thereof, and has a bearing on another end thereof. The rack has an end connecting with the bearing, and a wheel is movably assembled on another end of the rack. A plastic shell envelops the rack. A projection extends from an inward surface of the rack. A latch portion is formed on an inward surface of the plastic shell. The driving unit includes a rotating member corresponding to the through hole, a push member corresponding to a peripheral of the rotating member, a sleeve telescopically mounted on the push member, and a resilient member on the sleeve and abutting the push member. The arresting unit includes an axis pole, a gear disc mounted on the axis pole for corresponding to the latch portion, and an arresting block mounted below the gear disc and corresponding to the wheel. The axis pole extends into the sleeve for assembling with the push member. A slot is defined in the gear disc for corresponding to the projection.

### BRIEF DESCRIPTION OF THE DRAWINGS

Fig. 1 is a perspective view of a truckle according to the present invention.
Fig. 2 is an exploded view of the truckle of Fig. 1.
Fig. 3 is a cross-sectional view of the truckle while rotating.
Fig. 4 is a cross-sectional view of the truckle while limiting direction.
Fig. 5 is a cross-sectional view of the truckle while limiting direction and rotation.

### DESCRIPTION OF THE PREFERRED EMBODIMENTS

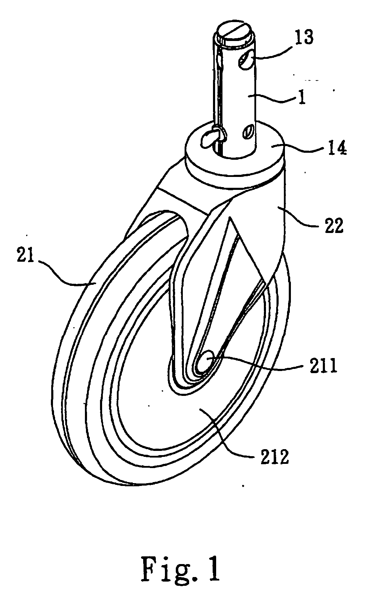

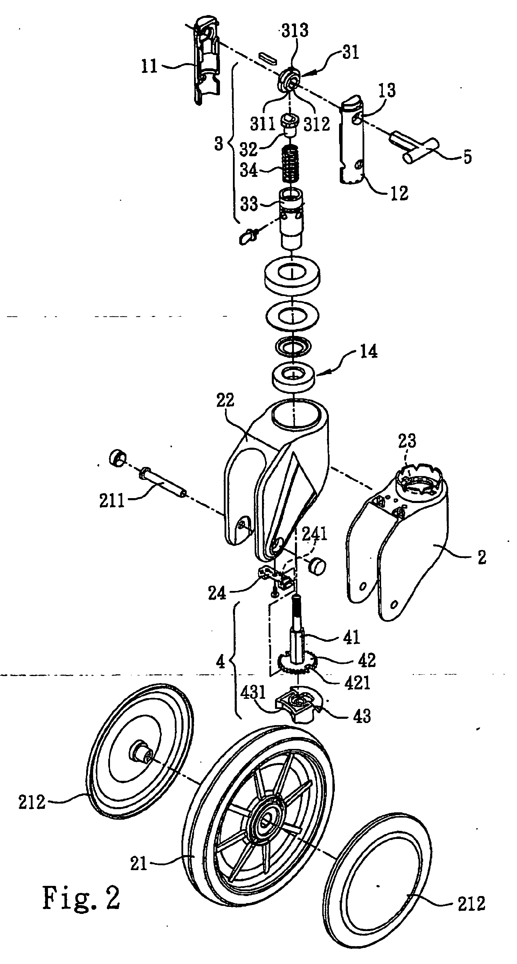

With reference to Figs. 1, 2 and 3, a truckle in accordance with the present invention comprises a swiveling shaft 1, a rack 2, a driving unit 3 and an arresting unit 4.

The swiveling shaft 1 comprises a first casing 11 and a second casing 12 assembled together. A through hole 13 is defined near an end of the swiveling shaft 1. A bearing 14 is provided on another end of the swiveling shaft 1.

The rack 2 has an end connecting with the bearing 14. A wheel 21 is movably assembled on another end of the rack 2. The wheel 21 has a central shaft 211 movable pivoted on the rack 2, and side covers 212 on opposing sides thereof. A plastic shell 22 envelops the rack 2 for protecting against erosion, ornamenting the rack 2, and shielding from static. A projection 23 extends from an inward surface of the rack 2. A latch portion 24 is formed on an inward surface of the plastic shell 22, and forms a dental portion 241 on a side thereof.

The driving unit 3 is received in the swiveling shaft 1, and comprises a rotating member 31 corresponding to the through hole 13, a push member 32 corresponding to a peripheral of the rotating member 31, a sleeve 33 telescopically mounted on the push member 32, and a resilient member 34 on the sleeve 33 and abutting the push member 32. A first cutout 311 and a second cutout 312 are respectively defined on a peripheral of the rotating member 31. A flange 313 is formed on a peripheral of the rotating member 31. A driving pin 5 extends through the through hole 13 and is mounted on the rotating member 31.

The arresting unit 4 is assembled with the driving unit 3, and comprises an axis pole 41, a gear disc 42 mounted on the axis pole 41 for corresponding to the latch portion 24, and an arresting block 43 below the gear disc 42 and corresponding to the wheel 21. The axis pole 41 extends into the sleeve 33 for assembling with the push member 32. A slot 421 is defined in the gear disc 42 for corresponding to the projection 23. The arresting block 43 forms a barbed surface 431 on a side thereof and corresponding to the wheel 21.

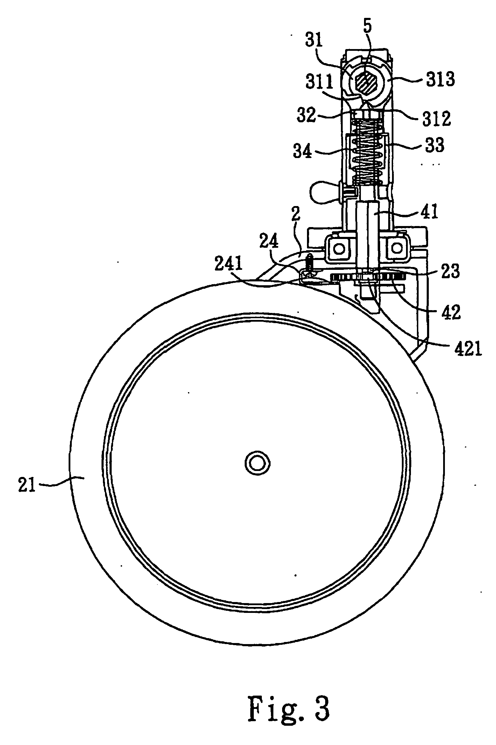

Further referring to Figs. 3, 4 and 5, in use, the swiveling shaft 1 is assembled on a bottom of a carried object (not shown). As shown in Fig. 3, when the object is moved, the push member 32 of the driving unit 3 abuts against the second cutout 312 of the rotating member 31. The gear disc 42 and the arresting block 43 of the arresting unit 4 are separate from the latch portion 24 and the wheel 21. The rack 2 and the wheel 21 are free to rotate and change direction.

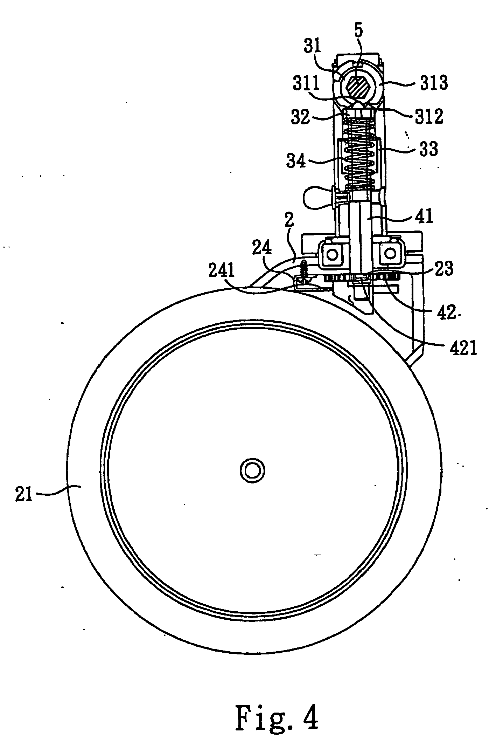

The driving pin 5 extends through the through hole 13 of the swiveling shaft 1 and is mounted on the rotating member 31. In order to limit direction of the truckle solely, the driving pin 5 drives the push member 32 to abut against the first cutout 311 of the rotating member 31. The axis pole 41 moves up with the resiliency of the resilient member 34. The gear disc 42 is brought to abut against an inward surface of the rack 2. The projection 23 is embedded into the slot 421 of the gear disc 42, positioning the rack 2 and limiting direction of the truckle, as shown in Fig. 4.

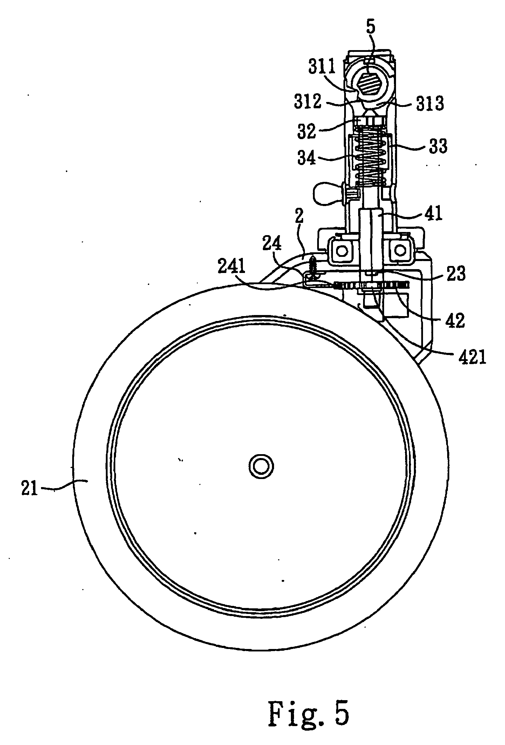

In order to limit direction and rotation of the truckle at the same time, the driving pin 5 rotates the rotating member 31. The flange 313 of the rotating member 31 abuts against the push member 32. The axis pole 41 moves downward and presses the resilient member 34. The gear disc 42 and the arresting block 43 move down. The gear disc 42 meshes with the dental portion 241 of the latch portion 24. The barbed surface 431 of the arresting block 43 retain the wheel 21 firmly, positioning the rack 2 and the wheel 21 and limiting direction and rotation of the truckle, as shown in Fig. 5.

As described above, the truckle of the present invention can either limit direction thereof solely or limit direction and rotation simultaneously. In addition, the truckle has firm structure and can be arrested reliably.

## Claims

1. A truckle comprising:
a swiveling shaft 1 defining a through hole 13 near an end thereof, and having a bearing 14 on another end thereof;
a rack 2 having an end connecting with the bearing 14, a wheel 21 being movably assembled on another end of the rack 2, a plastic shell 22 enveloping the rack 2, a projection 23 extending from an inward surface of the rack 2, a latch portion 24 being formed on an inward surface of the plastic shell 22;
a driving unit 3 being received in the swivel shaft 1, and comprising a rotating member 31 corresponding to the through hole 13, a push member 32 corresponding to a peripheral of the rotating member 31, a sleeve 33 telescopically mounted on the push member 32, and a resilient member 34 on the sleeve 33 and abutting the push member 32; and
**characterized in that** it further comprises an arresting unit 4 being assembled with the driving unit 3, and comprising an axis pole 41, a gear disc 42 mounted on the axis pole 41 for corresponding to the latch portion 24, and an arresting block 43 mounted below the gear disc 42 and corresponding to the wheel 21, the axis pole 41 extending into the sleeve 33 for assembling with the push member 32, a slot being defined in the gear disc 42 for corresponding to the projection 23.

2. The truckle as claimed in claim 1, wherein the swiveling shaft 1 comprises a first casing 11 and a second casing 12 assembled together.

3. The truckle as claimed in claim 1, wherein the wheel has a central shaft 211 movable pivoted on the rack 2, and side covers 212 on opposing sides thereof.

4. The truckle as claimed in claim 1, wherein a dental portion 241 is formed on a side of the latch portion 24 for meshing with the gear disc 42.

5. The truckle as claimed in claim 1, wherein a driving pin 5 extends through the through hole 13 of the swiveling shaft 1, a first cutout 311 and a second cutout 312 being respectively defined on a peripheral of the rotating-member 31, a flange 313 being formed on a peripheral of the rotating member 31.

6. The truckle as claimed in claim 1, wherein the arresting block 43 forms a barbed surface 431 on a side thereof and corresponding to the wheel 21.

## Patentansprüche

1. Rolle, die umfasst:
einen schwenkbaren Schaft 1, der nahe an seinem einem Ende ein Durchgangsloch 13 aufweist und der ein Lager 14 an seinem anderen Ende aufweist,
einen Träger 2, der ein Ende, das mit dem Lager 14 verbunden ist, ein Rad 21, das beweglich an dem anderen Ende des Trägers 2 angeordnet ist, ein Plastikgehäuse 22, das den Träger 2 umschließt, einen Vorsprung 23, der sich von einer inneren Fläche des Trägers 2 erstreckt, und einen Verriegelungsbereich 24 aufweist, der an einer inneren Fläche des Plastikgehäuses 22 ausgebildet ist,
eine Antriebseinheit 3, die in dem schwenkbaren Schaft 1 aufgenommen ist und die ein Drehelement 31, das mit dem Durchgangsloch 13 korrespondiert, ein Schiebelement 32, das einem Umfang des Drehelements 31 entspricht, eine Hülse 33, die teleskopisch auf dem Schiebelement 32 angebracht ist, und ein elastisches Element 34 auf der Hülse 33 umfasst, das an dem Schiebelement 32 anliegt, und
**dadurch gekennzeichnet, dass**
sie ferner eine Arretiereinheit 4 umfasst, die mit der Antriebseinheit 3 zusammen gebaut ist und eine Achsstange 41, eine Lagerscheibe 42, die auf der Achsstange 41 korrespondierend mit dem Verriegelungsbereich 24 angebracht ist, und einen Arretierkörper 43 umfasst, der unterhalb der Lagerscheibe 42 angebracht ist und der dem Rad 21 korrespondiert, wobei sich die Achsstange 41 zum Zusammenbau mit dem Schiebelement 32 in die Hülse 33 erstreckt, und wobei ein Schlitz in der Lagerscheibe 42 korrespondierend zu dem Vorsprung 23 vorgesehen ist.

2. Rolle nach Anspruch 1, wobei der schwenkbare Schaft 1 ein erstes Gehäuse 11 und ein zweites Gehäuse 12 umfasst, die aneinander angebracht sind.

3. Rolle nach Anspruch 1, wobei das Rad einen zentralen Schaft 211, der gegenüber dem Träger 2 drehbar ist, und seitliche Abdeckungen 212 an seinen gegenüberliegenden Seiten umfasst.

4. Rolle nach Anspruch 1, wobei ein Zahnrad 241 an einer Seite des Verriegelungsbereichs 24 zum Eingreifen in die Lagerscheibe 42 ausgebildet ist.

5. Rolle nach Anspruch 1, wobei ein Antriebsstift 5 sich durch das Durchgangsloch 13 des drehbaren Schaftes 1 erstreckt, wobei ein erster Ausschnitt 311 und ein zweiter Ausschnitt 312 jeweils an einem Umfang des Drehelements 31 vorgesehen sind, und wobei ein Flansch 113 an dem Umfang des Drehelements 31 ausgebildet ist.

6. Rolle nach Anspruch 1, wobei der Arretierkörper 43 eine mit Stacheln versehene Fläche 431 korrespondierend zu dem Rad 21 an einer seiner Seiten ausbildet.

## Revendications

1. Roulette comprenant:
un arbre pivotant 1 définissant un trou 13 près d'une extrémité de celui-ci et ayant un palier 14 sur une autre extrémité de celui-ci ;
un support 2 ayant une extrémité reliée au palier 14, une roue 21 étant assemblée de manière mobile sur une autre extrémité du support 2, une enveloppe plastique 22 qui enveloppe le support 2, une saillie 23 qui s'étend à partir d'une surface vers l'intérieur du support 2, une portion de languette 24 qui est formée sur une surface vers l'intérieur de l'enveloppe plastique 22 ;
une unité d'entraînement 3 qui est logée dans l'arbre pivotant 2 et qui comprend un élément rotatif 31 qui correspond au trou 13, un élément de poussée 32 qui correspond à une périphérie de l'élément rotatif 31, un manchon 33 monté de manière télescopique sur l'élément de poussée 32 et un élément élastique 34 sur le manchon 33 et qui bute contre l'élément de poussée 32 et
**caractérisé en ce**
**qu'**il comprend de plus une unité d'arrêt 4 qui est assemblée avec l'unité d'entraînement 3 et qui comprend un pôle à axe 41, un disque d'engrenage 42 monté sur le pôle à axe 41 pour correspondre à la portion de languette 24 et un bloc d'arrêt 43 monté au-dessous du disque d'engrenage 42 et correspondant à la roue 21, le pôle à axe 41 s'étendant dans le manchon 33 pour l'assemblage avec l'élément de poussée 32, une fente étant définie dans le disque d'engrenage 42 pour correspondre à la saillie 23.

2. Roulette selon la revendication 1 dans laquelle l'arbre pivotant 1 comprend un premier bâti 11 et un second bâti 12 assemblés ensemble.

3. Roulette selon la revendication 1 dans laquelle la roue a un arbre central 211 mobile pivoté sur le support 2 et des recouvrements latéraux 212 sur les côtés opposés de celui-ci.

4. Roulette selon la revendication 1 dans laquelle une portion dentale 241 est formée sur un côté de la portion de languette 24 pour s'engrener avec le disque d'engrenage 42.

5. Roulette selon la revendication 1 dans laquelle une broche d'entraînement 5 s'étend à travers le trou 13 de l'arbre pivotant 1, une première découpe 311 et une seconde découpe 312 étant respectivement définies sur une périphérie de l'élément rotatif 31, une bride 313 étant formée sur une périphérie de l'élément rotatif 31.

6. Roulette selon la revendication 1 dans laquelle le bloc d'arrêt 43 forme une surface barbelée sur un côté de celui-ci et correspondant à une roue.
